(19) Europäisches Patentamt
European Patent Office
Office européen des brevets

(11) **EP 2 772 046 B1**

(12) **EUROPEAN PATENT SPECIFICATION**

(45) Date of publication and mention
of the grant of the patent:
**08.01.2020  Bulletin 2020/02**

(21) Application number: **11788465.0**

(22) Date of filing: **28.11.2011**

(51) Int Cl.:
***H04N 5/232*** (2006.01)

(86) International application number:
**PCT/EP2011/071192**

(87) International publication number:
**WO 2013/060392 (02.05.2013 Gazette 2013/18)**

(54) **METHOD OF CONTROLLING A COOLING ARRANGEMENT**

VERFAHREN ZUR STEUERUNG EINER KÜHLANORDNUNG

MÉTHODE DE RÉGULATION D'UN ENSEMBLE DE REFROIDISSEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.10.2011  PCT/EP2011/068866**

(43) Date of publication of application:
**03.09.2014  Bulletin 2014/36**

(73) Proprietor: **Robert Bosch GmbH
70442 Stuttgart (DE)**

(72) Inventors:
• **BOITEN, Olav
5673 KS  Nuenen (NL)**
• **BOUWMAN, Fedde
5631 JE  Eindhoven (NL)**

(56) References cited:
**EP-A1- 1 008 973       WO-A1-00/04720
JP-A- 2008 011 233      US-A1- 2005 083 419
US-A1- 2005 099 515     US-A1- 2005 099 515
US-A1- 2007 071 343     US-A1- 2008 158 378
US-A1- 2010 103 295     US-B1- 7 280 141**

**Description**

Technical field

The invention provides for a method of controlling a cooling device for an image sensor of a camera, especially a dome camera, a cooling arrangement for performing such a method and a camera.

Background art

For ensuring fail-safe operation of the image sensor of a camera, especially a camera enclosed by a housing, e.g. a dome camera, a sufficient cooling of the imaging sensor has to be guaranteed.

A dome camera is a monitoring camera used in a protective system. Usually, the dome camera is incorporated within a hemispherical shaded dome made of plastics. Said dome is provided for protecting the camera against damage and vandalism.

Dome cameras have been used at flashpoints as well as in public means of transport both interior and exterior. A main advantage of such a dome camera is that it is not possible to determine the orientation of the camera hidden by the shaded dome.

Document WO0004720 using a switching hysteresis system which causes the heater to turn off at a temperature higher than the point at which it turns on, so as to prevent the circuitry from cycling on and off very rapidly.

Document
EP 1 729 269 A1 discloses a dome with optical correction for use in a vandal proof surveillance camera system. The dome comprises a transparent optical material, which itself comprises an inner surface and an outer surface. Both surfaces are essentially rotational symmetrical and exhibit non-spherical shapes. Said dome is used in a vandal proof surveillance camera system comprising said dome and a camera being pivotably mounted inside the dome.

However, to ensure operability of the dome camera the camera within the dome has to be cooled. For this purpose, it is known to use cooling devices as cooling fans, for example. Passive cooling systems, e.g. by a conductive path, can be used alternatively or additionally.

A main subject in developing a cooling control system is to increase the lifetime of the cooling device for an imaging sensor in an outdoor dome camera. This device enables to maintain good sensor/image performance at high temperatures. It is to be noted that imaging sensor performance is temperature dependent, usually, the lower the better. In case only sensor temperature is used to switch on and off the cooling device, the time period the cooling device is switched on would be too long and therefore, the life time of the cooling device would be limited.

Disclosure of the invention

The invention provides for method of controlling the operation of a cooling device according to claim 1. Subject matter of the dependent claims and the description define embodiments of the invention. Thus, the control is performed based on a model of an acceptable image performance and the temperature of the imaging sensor. Increasing temperature means increasing noise, especially fixed pattern noise. Furthermore, sensor specific artefacts can occur.

It has to be considered that performance degradation due to high temperature especially becomes visible in low light situations, namely high video gain and/or sensor integration time. The smart temperature management control according to the invention can switch the cooling device based on a model of the sensor performance and the actual video gain, integration time, and temperature. This way an optimal balance can be achieved between cooling device life time and image quality.

The cooling arrangement forming a smart temperature management system is an enabler to reduce unnecessary on time of the cooling device. The control can be done based on a model of the acceptable image performance against sensor and imaging parameters, e.g. sensor analogue gain AG, digital gain DG, integration time IT, and the sensor temperature T. With help of the model, a parameter representing the image performance level (IPL) can be calculated:

$$IPL = f(T, AG, DG, IT)$$

An acceptable lower boundary of the IPL is determined (MIN_IPL), e.g. by perception studies and/or measurements.

The smart temperature management system will try to keep the image performance level above the minimum image performance level by controlling the cooling device operation. This control can be both continuous and in discrete steps, e.g. on/off.

As an example, an embodiment of the method described is given below in more detail:
A cooling device is switched off/on based on sensor temperature T, analog gain AG, digital gain DG and time. The image performance level (IPL) and MIN_IPL are defined as:

$$IPL = (a + 2^{\wedge}( (T-b) / c )) * IT * AG * DG * d$$

$$MIN\_IPL = e$$

(a, b, c, d, and e are constants)
The conditions for switching on the cooling device are:

- If T >= Tmax the fan should always go on (Tmax is a constant)
- If IPL <= MIN_IPL the fan should go on
- The temperature at the switch on moment is stored: Tswitch = T
- Calculate IPL off threshold (IPLO, based on current temperature minus hysteresis h)

$$IPLO = (a + 2^{\wedge}( (T-b-h) / c )) * IT * AG * DG * d$$

The conditions for switching the cooling device off are:

- If T <= Tmin the fan should always go off (Tmin is a constant)
- If IPL >= IPLO the fan should go off

The hysteresis h that can be considered in performing the method described is applied to prevent that the fan will not quickly switch off after switching on to cool the sensor. This hysteresis typically is higher than the temperature delta the fan causes. Input parameters like gain and integration time are temporally filtered to reduce the influence on the control algorithm due to temporary glitches or noise. Finally, in the system time based hysteresis is applied. After the cooling device was switched off or on, the cooling device will not be switched for a certain period of time. This is done to limit the amount of fan switches for a better lifetime of the cooling device.
In an alternative embodiment the colling device is switched off/on based on sensor temperature T and/or digital gain DG and/or sensor analog gain SAG and/or sensor digital gain SDG and/or sensor integration time SIT and/or the sensor temperature T.
In this embodiment the image performance level (IPL) and MIN_IPL are defined as:

$$IPL = f(T, DG, SAG, SDG, SIT)$$

$$IPL = (a + 2^{\wedge}( (T-b) / c )) * DG * SAG * SDG * SIT * d$$

$$MIN\_IPL = e$$

$$IPLO = (a + 2^{\wedge}( (T-b-h) / c )) * DG * SAG * SDG * SIT * d$$

Optionally, different sensor or video system parameters or in system measurements can be used to determine the image quality at a certain temperature.
The method described allows for smartly controlling a cooling device of an imaging sensor in a camera to reduce the on time. Therefore, actively cooling the image sensor without excessively stressing the cooling device is possible.
It is to be noted that any suitable cooling device, e.g. a cooling fan or a peltier cooler, can be used.

Brief description of the drawings

The foregoing summary as well as the following detailed description of preferred embodiments of the invention will be better understood when read in conjunction with the appended drawings. For the purpose of illustrating the invention, embodiments of the invention are shown in the drawings. It should be understood however, that the invention is not limited to precise arrangements and instrumentalities shown.

It is self-evident that the features mentioned above and those which are still to be explained in the following text can be used not only in the respectively stated combination but also in other combinations or on their own without departing from the scope of the present invention.

The invention will be described in more details with reference to the drawings given below, in which

Figure 1    shows an exemplary embodiment of a cooling control arrangement according to the invention in an overview, and

Figure 2    shows the functional principal of the cooling control arrangement in a blockdiagram, and

Figure 3    shows a second embodiment of a cooling control arrangement according to the invention in an overview.

Description of embodiments

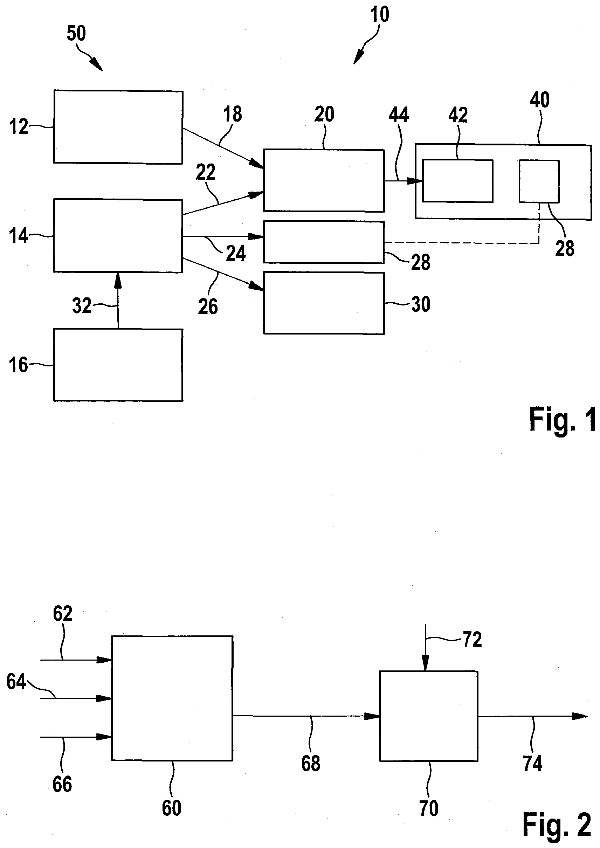

Figure 1 shows an exemplary embodiment of the cooling control arrangement 10 forming the smart temperature management control system comprising cooling device 42 within a camera 40 and a control device 50, wherein the control device 50 is located outside the camera 40. This means that the cooling control management arrangement 10 comprises the cooling device 42 and the control device 50, that can be implemented as an algorithm.

The drawing shows a temperature sensor 12, a video level control 14 and a light sensor 16 for light measurement. The temperature sensor 12 transmits a signal 18 representing the determined temperature of the imaging sensor 28 to a temperature management 20. The termperature sensor 12 is located nearby the imaging sensor 28. In a preferred embodiment the determined termperature depends from a measured temperature and an offset value. The video level control 14 transmits signals 22, 24, 26 representing the integration time (IT), the analogue gain (AG), and the digital gain (DG) to the temperature management 20, an imaging sensor 28, and a video processing 30. The light sensor transmits a signal 32 representing the measured light to the video level control 14.

The temperature management 20 as part of the control device 50 controls operation of the cooling device 42, e.g. a cooling fan, within the camera 40 by a control signal 44. The cooling device 42 is adapted to cool the imaging sensor 28 within the camera, especially within a housing of the camera 40. In the drawing, the imaging sensor 28 is shown twice for clarity reasons as indicated by the broken line.

Figure 2 shows operation of the cooling control arrangement in more detail in a blockdiagram.

A model 60 which the control according to the invention is based on is created with help of the gain 62 (analogue and/or digital), the integration time IT 64, and the temperature 66. With help of the model 60 a parameter 68 representing the image performance level IPL is calculated. Furthermore, IPLO can be calculated as it is part of the model 60. A control 70 using the IPL and a signal 72 representing the time generates a control signal 74 for controlling operation of the cooling device.

The control can be based on the model (60) of the acceptable image performance against at least one sensor and/or imaging parameter and the temperature (66) of the imaging sensor. This control can be performed continuously or in discrete steps.

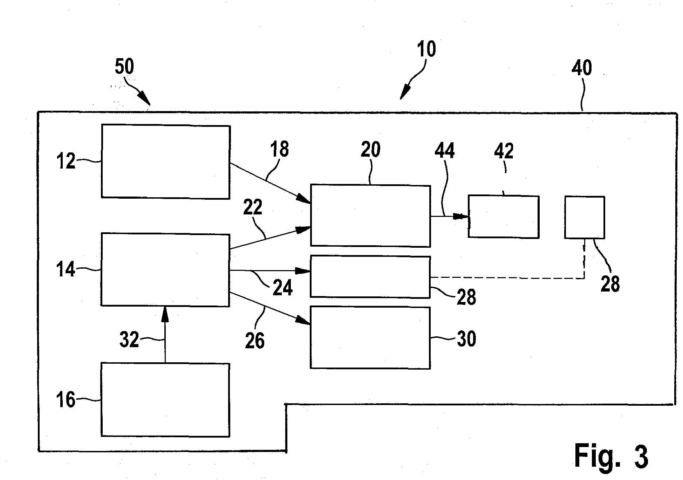

Figure 3 shows a second embodiment of the cooling control arrangement 10 forming the smart temperature management control system comprising cooling device 42 within a camera 40 and a control device 50 within the camera. This means that the cooling control management arrangement 10 comprises the cooling device 42 and the control device 50, that can be implemented as an algorithm.

The drawing shows a temperature sensor 12, a video level control 14 and a light sensor 16 for light measurement. The temperature sensor 12 transmits a signal 18 representing the determined temperature of the imaging sensor 28 to a temperature management 20. The termperature sensor 12 is located nearby the imaging sensor 28. In this second embodiment the determined termperature depends from a measured temperature and an offset value. The video level control 14 transmits signals 22, 24, 26 representing the integration time (IT) and/or the analogue gain (AG) and/or the digital gain (DG) to the temperature management 20 and/or an imaging sensor 28 and/or a video processing 30. The light sensor transmits a signal 32 representing the measured light to the video level control 14. Additionally or as an alternative the signal 32 representing the measured light to the video level control 14 is based on the levels provided by the imaging sensor 28.

The temperature management 20 as part of the control device 50 controls operation of the cooling device 42, e.g. a cooling fan, within the camera 40 by a control signal 44. The cooling device 42 is adapted to cool the imaging sensor 28 within the camera, especially within a housing of the camera 40. In the drawing, the imaging sensor 28 is shown twice for clarity reasons as indicated by the broken line. The operation of the temperature management 20 according to the second embodiment is shown in figure 2.

## Claims

1. Method of controlling the operation of a cooling device (42) for cooling an imaging sensor (28) of a camera (40), wherein the control is performed based on a model (60) of an acceptable image performance against at least one sensor and/or imaging parameter and a temperature (66) of the imaging sensor (28) in such a way that a image performance level will be above a minimum image performance level by controlling a cooling device operation, wherein the at least one sensor and/or imaging parameter comprises at least one of: sensor analogue gain (SAG), digital gain (DG), sensor digital gain (SDG), integration time (IT).

2. Method according to claim 1, wherein a parameter representing an imaging performance level (IPL) is calculated with the model (60).

3. Method according to one of claims 1 to 2, wherein the control is performed continuously.

4. Method according to one of claims 1 to 2, wherein the control is performed in discrete steps.

5. Method according to one of claims 1 to 4, wherein a hysteresis will be considered.

6. Cooling arrangement comprising a cooling device (42) and a control device (50), which is adapted to perform a method according to one of claims 1 to 5 to control operation of the cooling device (42).

7. Cooling arrangement according to claim 6, wherein the cooling device (42) is a cooling fan.

8. Cooling arrangement according to claim 6, wherein the cooling device (42) is a peltier cooler.

9. Camera, especially dome camera, comprising a cooling arrangement according to one of claims 6 to 8.

## Patentansprüche

1. Verfahren zur Steuerung des Betriebs einer Kühlvorrichtung (42) zum Kühlen eines Bildsensors (28) einer Kamera (40), wobei die Steuerung basierend auf einem Modell (60) einer akzeptierbaren Bildleistung an mindestens einem Sensor- und/oder Abbildungsparameter und einer Temperatur (66) des Bildsensors (28) derart durchgeführt wird, dass ein Bildleistungsgrad durch Steuern eines Kühlvorrichtungsbetriebs höher als ein Mindestbildleistungsgrad wird, wobei der mindestens eine Sensor- und/oder Abbildungsparameter mindestens eine von Folgenden umfasst: Sensor-Analogverstärkung (SAG), Digitalverstärkung (DG), Sensor-Digitalverstärkung (SDG), Integrationszeit (IT).

2. Verfahren nach Anspruch 1, wobei ein Parameter, der einen Bildleistungsgrad (IPL) darstellt, mit dem Modell (60) berechnet wird.

3. Verfahren nach einem der Ansprüche 1 bis 2, wobei die Steuerung kontinuierlich durchgeführt wird.

4. Verfahren nach einem der Ansprüche 1 bis 2, wobei die Steuerung in diskreten Schritten durchgeführt wird.

5. Verfahren nach einem der Ansprüche 1 bis 4, wobei eine Hysterese berücksichtigt wird.

6. Kühlanordnung, umfassend eine Kühlvorrichtung (42) und eine Steuervorrichtung (50), die zum Durchführen eines Verfahrens nach einem der Ansprüche 1 bis 5 zur Steuerung des Betriebs der Kühlvorrichtung (42) ausgelegt ist.

7. Kühlanordnung nach Anspruch 6, wobei die Kühlvorrichtung ein Kühlgebläse (42) ist.

8. Kühlanordnung nach Anspruch 6, wobei die Kühlvorrichtung ein Peltier-Kühler (42) ist.

9.  Kamera, insbesondere Kuppelkamera, umfassend eine Kühlanordnung nach einem der Ansprüche 6 bis 8.

**Revendications**

1.  Procédé permettant de commander le fonctionnement d'un dispositif de refroidissement (42) pour refroidir un capteur d'imagerie (28) d'une caméra (40), dans lequel la commande est effectuée sur la base d'un modèle (60) d'une performance d'image acceptable en se référant à au moins un paramètre de capteur et/ou d'imagerie et à une température (66) du capteur d'imagerie (28) de telle sorte qu'un niveau de performance d'image sera supérieur à un niveau de performance d'image minimum par la commande du fonctionnement d'un dispositif de refroidissement, dans lequel ledit au moins un paramètre de capteur et/ou d'imagerie comprend au moins un élément parmi : un gain analogique de capteur (SAG), un gain numérique (DG), un gain numérique de capteur (SDG), un temps d'intégration (IT) .

2.  Procédé selon la revendication 1, dans lequel un paramètre représentant un niveau de performance d'imagerie (IPL) est calculé avec le modèle (60).

3.  Procédé selon l'une quelconque des revendications 1 à 2, dans lequel la commande est effectuée en continu.

4.  Procédé selon l'une quelconque des revendications 1 à 2, dans lequel la commande est effectuée par étapes distinctes.

5.  Procédé selon l'une quelconque des revendications 1 à 4, dans lequel une hystérèse sera prise en considération.

6.  Agencement de refroidissement comprenant un dispositif de refroidissement (42) et un dispositif de commande (50) qui est adapté pour effectuer un procédé selon l'une quelconque des revendications 1 à 5 pour commander le fonctionnement du dispositif de refroidissement (42).

7.  Agencement de refroidissement selon la revendication 6, dans lequel le dispositif de refroidissement (42) est un ventilateur de refroidissement.

8.  Agencement de refroidissement selon la revendication 6, dans lequel le dispositif de refroidissement (42) est un refroidisseur de type Peltier.

9.  Caméra, notamment caméra dôme, comprenant un agencement de refroidissement selon l'une quelconque des revendications 6 à 8.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0004720 A
- EP 1729269 A1